# EUROPEAN PATENT SPECIFICATION

(11) **EP 0 700 806 B1**
(45) Date of publication and mention of the grant of the patent: **13.03.2002**
(21) Application number: 95113387.5
(22) Date of filing: 25.08.1995
(51) Int. Cl.: B60P 1/44

(54) **A pull-out system for a tailgate**
Ausrücksystem für eine Heckladeeinrichtung
Système de décalage pour une plateforme élévatrice arrière

(30) Priority: 26.08.1994 DK 98594
(43) Date of publication of application: 13.03.1996
(60) Divisional application: 01105200.8
(73) Proprietor: Sörensen Hydraulik, Zweigniederlassung, Ulfborg, Filial af Sörensen Hydraulik GmbH, Tyskland, 6990 Ulfborg (DK)
(72) Inventor: Jensen, Jens Herman, DK-6990 Ulfborg (DK)
(74) Representative: Seemann, Ralph, Dr. Dipl.-Phys.

(56) References cited:
- BE-A- 859 070
- DE-A- 2 654 285

## Description

The present invention relates to a pull-out system for a tailgate of a lorry, said pull-out system comprising at least one first and at least one second mechanical guide. Such a system is e.g. known from BE-A-859.070.

The present invention is concerned with tailgates of the type designed to be stored under the platform of a lorry when the tailgate is not in use. Various systems are known for pulling out and retracting a tailgate under the platform of a lorry. A common feature of these systems is that there are at least two guides with bearing pins sliding in bearing cylinders through the bearing bushings. Some systems are provided with a mechanical power transmission device, whereas others are provided with a hydraulic one.

The known systems possess the disadvantage, however, that a very precise steering of the mechanical guides is required in order to prevent the occurrence of squeezing between bearing surfaces of the guides, i.e. the occurrence of a biased guiding which causes the bearings of the guides to become interlocked. Therefore, at least two parallel power transmission devices are always provided in order to adjust the movement of the guides so as to prevent squeezing between the bearings. As there are at least two power transmission devices, this further requires a very precise mutual steering of them in order for the devices to perform the desired adjustment.

Due to the comprehensive steering of the power transmission devices, it is also necessary to apply complicated methods for securing known pull-out systems to the chassis of a lorry, since the reference of the power transmission devices vis-à-vis the pull-out system is exactly the lorry. Finally, known systems possess the further disadvantage that the tailgate, usually of the folded type, is heavy to unfold after the tailgate has been pulled out from under the platform of the lorry.

It is the object of the present invention to disclose a pull-out system that does not possess the above-mentioned disadvantages by providing a system which only needs one power transmission device, without any occurrence of squeezing between the bearings, and wherein the tailgate is easily unfolded after having pulled out.

This object is achieved by a pull-out system which is characterized in that the bearing cylinder of the first mechanical guide is provided with at least two bearing surfaces having normals that extend in two nonparallel directions, and that the bearing cylinder of the second mechanical guide is provided with at least two bearing surfaces having normals that extend in further two different directions, said different directions being also different from the first two nonparallel directions.

A pull-out system according to the present invention is distinguished in that the guides comprise bearing surfaces having normals that are oriented in such directions that squeezing cannot arise even if biases guiding occurs. As a consequence only one power transmission device is needed, and mutual steering of several power transmission devices is no longer necessary.

In the following pages the pull-out system according to the invention will be described as being in a situation where the system is mounted under the platform of a lorry. The pull-out system of a preferred embodiment comprises two guides with a first and a second bearing cylinder, a first and a second guiding pin, and bearing bushings provided between the bearing cylinders and pins and contacting bearing surfaces in the bearing cylinder. The bearing cylinders of this preferred embodiment have an octagonal cross-section with four first surfaces having normals that are oriented obliquely in relation to horizontal and vertical and four second surfaces that are oriented in pairs vertically and horizontally.

In the first bearing cylinder it is primarily the four oblique surfaces that constitute bearing surfaces, whereas in the second bearing cylinder it is primarily the two horizontal bearing surfaces with vertical normals that constitute bearing surfaces. Thus, in the preferred embodiment the two vertical surfaces with horizontal normals have no function as bearing surfaces, neither in the first nor in the second bearing cylinder.

The first bearing cylinder with oblique bearing surfaces is primarily intended for guiding the pulling out and retraction of the tailgate back and forth under the platform of the lorry, secondarily for carrying the weight of the tailgate. The guiding is to ensure that the tailgate is moved straightly out and in. The second bearing cylinder with horizontal bearing surfaces having vertical normals is primarily intended for carrying the weight of the tailgate, secondarily for guiding the tailgate.

As mentioned, the oblique bearing surfaces of the first bearing cylinder has normals that are obliquely oriented and thus have a component in horizontal and vertical directions. The horizontal bearing surfaces of the second bearing cylinder have normals with only a vertical component. If squeezing were to occur between the bearing surfaces of the first and second bearing cylinders, this would consequently only be between the vertical components of the bearing surfaces in the first bearing cylinder and the vertical normals of the bearing surfaces in the second bearing cylinder.

However, the bearing surfaces are provided in such a manner that the power component in vertical direction at a given load is considerably stronger on the horizontal bearing surfaces in the second bearing cylinder than on the oblique bearing surfaces in the first bearing cylinder. Therefore, it will be the power component on the horizontal surfaces that will be critical for the effect of the power component on the guiding. The risk of squeezing between the bearing surfaces in the first and the second bearing cylinder is consequently very low, although it does exist.

Since no bearing surfaces with a horizontal normal are provided in the second bearing cylinder, there is no possibility of squeezing in horizontal direction between the horizontal component of the oblique bearing surfaces in the first bearing cylinder and the bearing surfaces in the second bearing cylinder.

Due to the very small, but existing, risk of squeezing between the bearing surfaces in the two bearing cylinders at a given power component in vertical direction, the power transmission device is mounted so that it operates the tailgate at a position closer to the first bearing cylinder than the second cylinder, i.e. asymmetrically in relation to the midpoint between the two bearing cylinders. Due to this arrangement, the very small risk of squeezing is completely eliminated.

The bearing cylinders are mounted by means of mounting members on the chassis of the lorry, whereas the bearing pins are connected to the tailgate. The connection to the tailgate is provided by connecting sections extending from the bearing pins, which extend inside the bearing cylinders, out through a slot in the bearing cylinders, and being secured to the tailgate. In order to prevent dirt and other foreign bodies from getting access to the bearing cylinders, bearing pins and bushings, blades are mounted along the edge areas of the slot and extend from either opposed edge area of the slot toward the centre of the slot. The outer edge areas of the blades are in contact with each other at least at the centre of the slot; alternatively the blades overlap in order to create a shelter for the slot. Thus, the connecting members extend in outward direction from the bearing pins through the blades by making a local separation of them at the position where the connection members extend through the slot.

In a preferred embodiment the mounting members by means of which the bearing cylinders are mounted on the chassis of the lorry are provided as a dovetail joint. The bearing cylinders are provided with a U-shaped section extending along the cylinders with the braces of the U oriented in horizontal direction and with the inner contour of the U having the shape of a dovetail. A corresponding section with an outer contour having the shape of a dovetail is secured to the chassis of the lorry. Thus, by a simple longitudinal sliding, the pull-out system may be secured to the chassis of the lorry by sliding the U-shaped profile extending along the bearing cylinders over the corresponding section secured to the chassis of the lorry. Due to the dovetail-shaped cross-section, the pull-out system will be able to detach from the chassis of the lorry.

In a further preferred embodiment the tailgate, if it is of the folded type, is provided with spring members extending between a hinge element and a first and second part, respectively, of the tailgate. The spring members cooperate in pairs.

A first spring member is in a condition of torsion when the first and second parts of the tailgate are folded. The first spring member assists the user in unfolding the tailgate before use since during the unfolding of the tailgate the first spring member changes from a condition of torsion to one of no torsion. After the tailgate has been completely unfolded, the first spring member is in a condition of no torsion.

A second spring member is in a condition of no torsion when the tailgate is folded. The second spring member changes from a condition of no torsion to one of torsion during the unfolding of the tailgate. After the tailgate has been completely unfolded, the second spring member is in a condition of torsion, however. The second spring member assists the user in folding the tailgate after use since during the folding of the tailgate, the second spring member changes from a condition of torsion to one of no torsion.

### DESCRIPTION OF THE DRAWINGS

The invention will now be described in further detail with reference to the attached drawings, in which
- fig: 1: is a section view through a preferred embodiment of a first and a second bearing cylinder in a pull-out system according to the invention,
- fig. 2: is a section view from aside through the embodiment of the pull-out system,
- fig. 3: is a section view from above through an embodiment of a pull-out system according to the invention,
- fig. 4: is a section view from one end of the embodiment of the pull-out system,
- fig. 4a: is an enlarged view of the left-hand bearing cylinder in fig. 4,
- fig. 4b: is an enlarged view of the right-hand bearing cylinder in fig. 4,
- fig. 5: is a perspective view of a folded-type tailgate constituting part of the pull-out system, and
- figs.6A-6B: show embodiments of spring member pairs for use in combination with a folded-type tailgate.

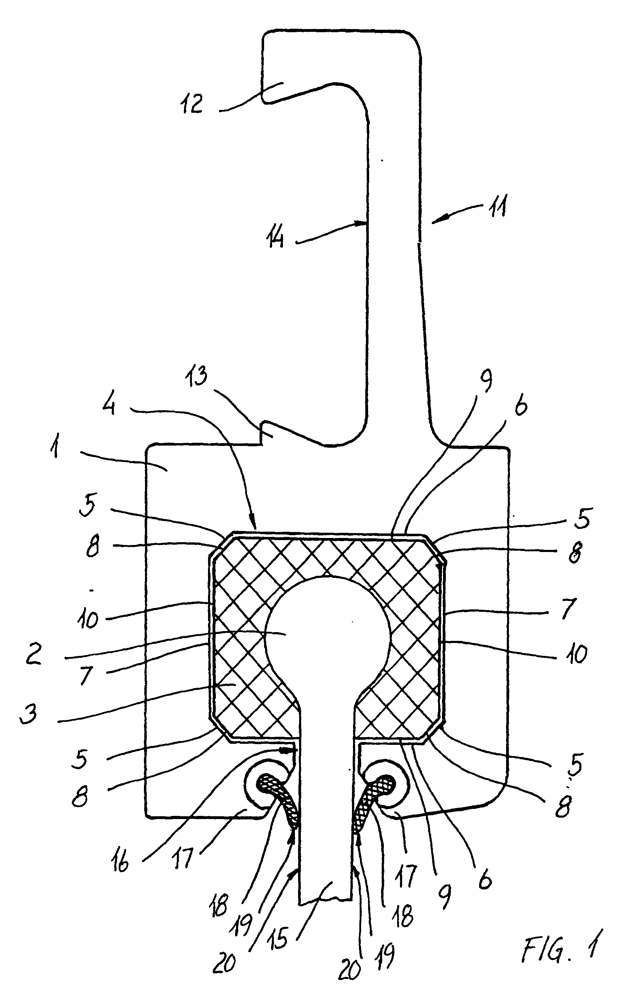

Fig. 1 illustrates a guide for a pull-out system according to the invention and comprises a bearing cylinder 1, a bearing pin 2 and bearing bushings 3 (only one is shown).

The bearing pin 2 and bearing bushings 3 are designed to be slidable back and forth in the bearing cylinder 1 in its longitudinal direction, perpendicularly to the plane of the figure. The bearing cylinder 1 is produced from aluminium in order to minimize its mass and has an inner contour 4 with an octagonal cross-section. The cross-section comprises four oblique surfaces 5, two horizontal surfaces 6 and two vertical surfaces 7. The bearing bushings 3 are produced from nytralon® and have an octagonal cross-section corresponding to the octagonal cross-section of the inner contour 4 of the bearing cylinder 1. The cross-section of the bearing bushing also has four oblique surfaces 8, two horizontal surfaces 9 and two vertical surfaces 10.

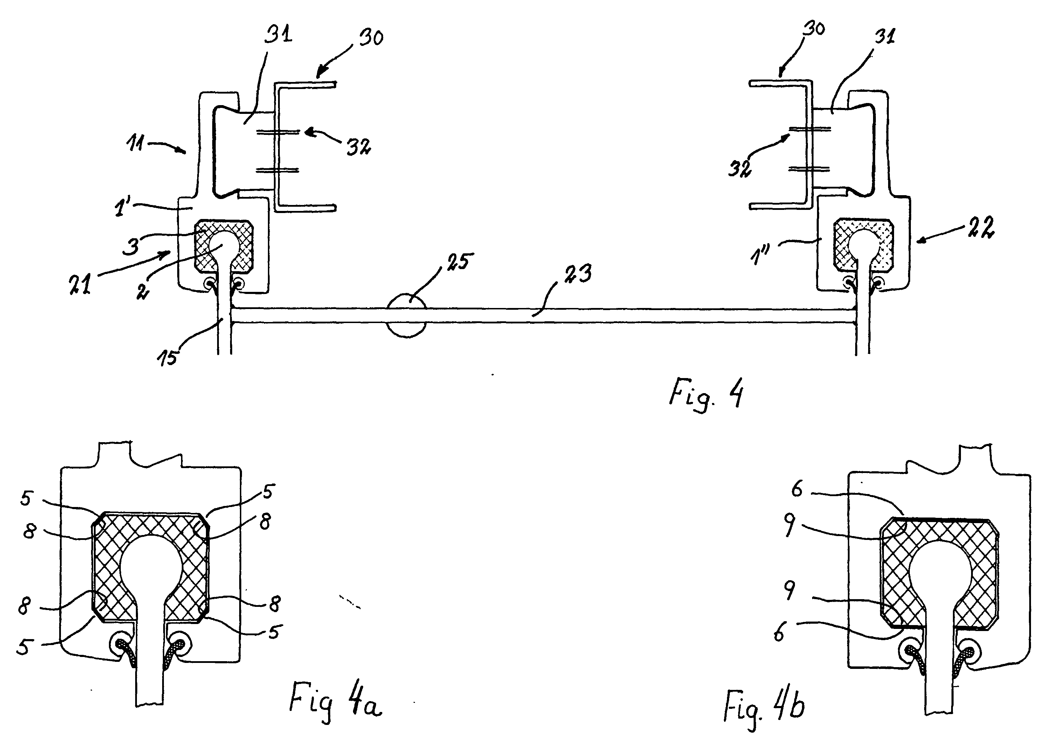

The top of the bearing cylinder is provided with a U-shaped section 11 extending in longitudinal direction of the bearing cylinder with the branches 12, 13 of the U oriented in horizontal direction. The inner contour 14 of the U is designed as a dovetail for easy and swift mounting on a lorry chassis (see fig. 4). The bearing pin 2 is mounted in the bearing bushing 3 and is provided with a connecting section 15 extending from the bearing pin out through a slot 16 provided in the bearing cylinder 1. The connecting section 15 is intended for connecting a tailgate (not shown) with the bearing pin 2.

In order to prevent dirt and other foreign bodies from having access to the bearing bushing 3 and the surfaces 5-10, the slit 16 is provided with blades 18 at its two edge areas 17. The blades 18 extend towards each other to a position where outer edges 19 of the blades are in contact with each other, alternatively overlap each other, in order to shelter the slot 16. In the situation shown, however, where the connecting section 15 extends out through the slot 16, the blades 18 are displaced away from mutual contact due to the connecting section and in stead contact either side 20 of the connecting section. The slot 16 is still sheltered against the access of foreign bodies to the bearing bushing 3 and the surfaces 5-10.

The surfaces 5, 6, 7 along the inner contour 4 of the bearing cylinder 1 and, respectively, the surfaces 8, 9, 10 of the bearing bushing 3 are intended for receiving loads originating from the weight of the tailgate and the forces arising during the pulling out and retraction of the tailgate under the platform of a lorry. The pull-out system according to the invention comprises at least two guides (see. fig. 4). The bearing bushings 3 in the two guides are not quite alike, however. Therefore, different bearing qualities apply to either of the two guides.

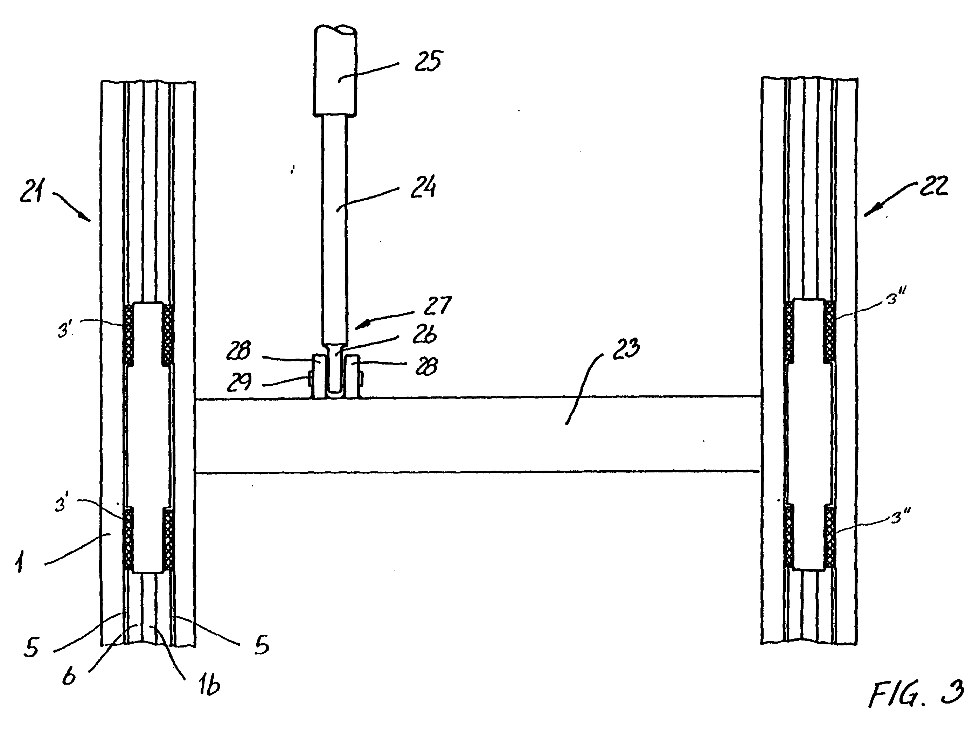

A first guide 21 (see fig. 3 and fig. 4) comprises a bearing bushing 3 possessing such measures that the bushing contacts the inner contour 4 of the bearing cylinder 1' along the oblique surfaces 5, 8 (see fig. 4a) of the bearing cylinder and the bushing, respectively. A second guide 22 (see fig. 3 and fig. 4) comprises a bearing bushing 3 possessing such measures that the bushing contacts the inner contour 4 of the bearing cylinder 1" along the horizontal surfaces 6, 9 (see fig. 4b) of the bearing cylinder and the bushing, respectively. The surfaces of the first and the second guide along which the bushing 3 and the inner contour 4 of the bearing cylinders 1', 1" contact each other are referred to as bearing surfaces.

The first guide (21) is able to absorb forces that are both vertical and horizontal as the bearing surfaces 5, 8 have oblique normals with a vertical and a horizontal component, respectively. The second guide (22), however, is only able to absorb forces that are vertical since the bearing surfaces 6, 9 have normals with a vertical component only. Thus, the vertical surfaces 7, 10 (see fig. 1) of both the first and the second guide, respectively guide bushings, have no function. At heavier loads on the tailgate, the horizontal surfaces 6, 9 of the first guide will also constitute bearing surfaces since the bushing will yield elastically so that the surfaces 9 of the bushing 3 will contact the surfaces 6 of the bearing cylinder 1.

The forces that may arise between the first (21) and the second (22) guide in connection with the storage and the pulling out and retraction of the tailgate under the platform of the lorry will thus be limited to forces in a vertical direction between the vertical components on the oblique bearing surfaces 5, 8 in the first guide (21) and forces that can only be vertical on the horizontal bearing surfaces 6, 9 in the second guide (22). This applies under the assumption that any forces in the plane of the bearing surfaces are negligible compared to forces perpendicular to the plane of the bearing surfaces.

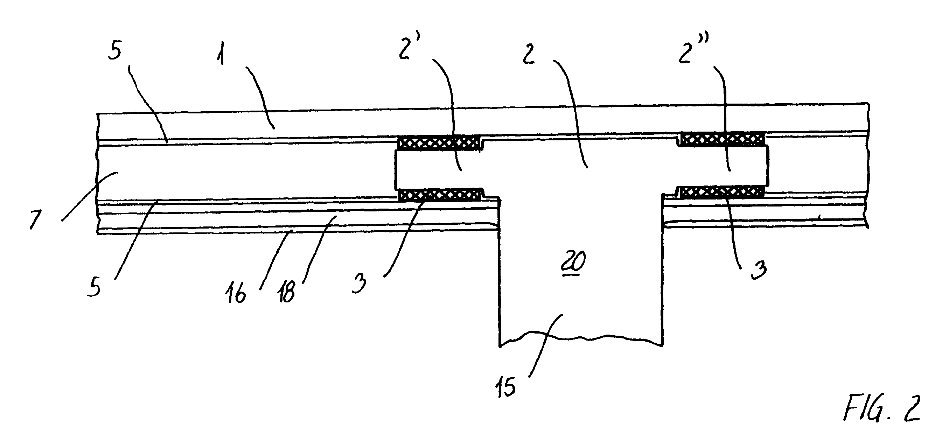

Fig. 2 illustrates a section view through a guide seen from aside. As mentioned, the guide comprises a bearing cylinder 1, a bearing pin 2 and bearing bushings 3, and the connecting section 15 extends from the bearing pin 2 out through the slot 16. Blades 18 extend along the edge area 17 and at the connecting section 15 they give way to stretch around it along the sides 20 of the connecting section. The bearing bushings 3 support the bearing pin 1 in a first end 2' and a second end 2" thereof. The inner contour 4 of the bearing cylinder 1 is illustrated by a vertical surface 7 and two oblique surfaces 5.

Fig. 3 illustrates a section view through an embodiment of a pull-out system according to the invention seen from above. The pull-out system comprises two guides 21, 22 with bearing cylinders 1, bearing pins 2 and bearing bushings 3. The bearing cylinders 1 are illustrated by a horizontal surface 6, two oblique surfaces 8 and the slot 16. A cross section 23 extends between the connecting sections 15 (not shown), which extend from the bearing pins 2 out through the slots 16. A piston 24 for a power transmission device in the form of a hydraulic cylinder 25 is mounted on the cross section 23 between the two guides 21, 22.

Mounting is accomplished by mounting an eye 26 in the outer end of the piston 24 between two ears 28 secured to the cross section 23. A pin 29 extends both through the eye 26 in the piston and through the ears 28. The power transmission device is positioned asymmetrically in relation to the midpoint between the two guides 21, 22. Due to this arrangement, any forces that may arise between one guide and the other will be eliminated.

Fig. 4 illustrates a section view through the pull-out system seen from one end. The pull-out system of the shown embodiment is mounted on a lorry chassis comprising, among other things, two longitudinal U sections 30. The pull-out system is mounted on the lorry chassis by means of the U-shaped sections 11 extending on top of the bearing cylinders 1 and having an inner contour 14 that is dovetail-shaped. A corresponding section 31 is secured to the chassis of the lorry by suitable securing means 32. Thus, the pull-out system may be mounted on the lorry chassis by sliding the pull-out system along the bearing cylinders 1 over the sections 31 secured to the lorry chassis.

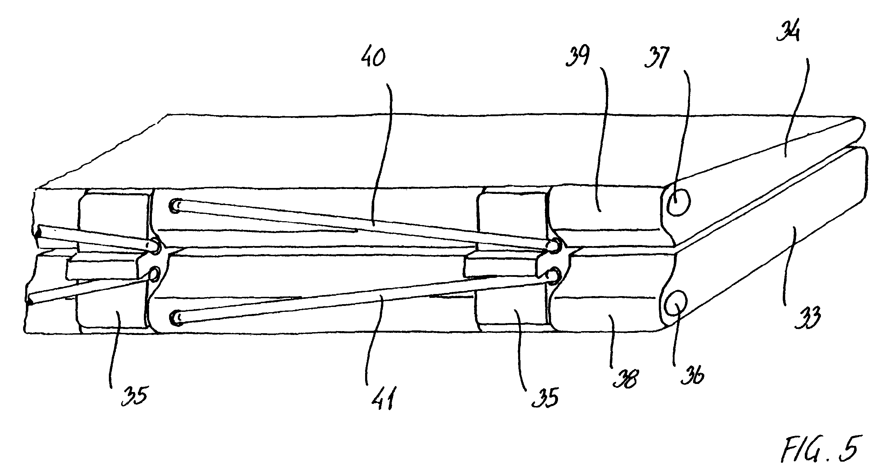

Fig. 5 illustrates a tailgate of the folded type, which is the most frequently used tailgate in combination with pull-out systems for tailgates in which the tailgate is stored under the platform of the lorry. The tailgate is illustrated in a folded condition. The tailgate comprises a first part 33 and a second part 34, which are mutually secured by hinge elements 35. A first shaft 36 and a second shaft 37 extend along edge areas 38, 39 of the first and second part 33, 34, respectively, of the tailgate and through the hinge elements 35. A first and a second spring member 40, 41 extend between a hinge element 35 and the first and second part 33, 34, respectively, of the tailgate. The spring members are produced from spring wire, and the elastic function of the spring members is generated by torsion of the wire.

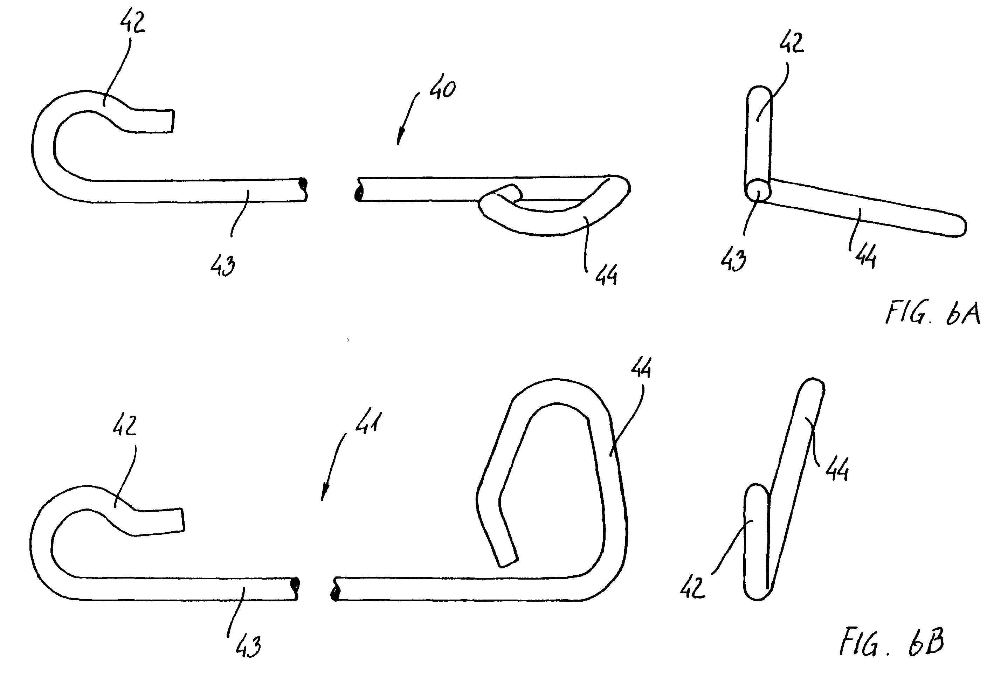

Figs. 6A and 6B illustrate embodiments of a first and a second spring member 40, 41. The spring members extend from a first eye 42 along a rectilinear section 43 and on to a second eye 44. Torsion of the spring members generates an elastic force in the rectilinear part 43 of the spring members. The first spring member 40 is bent in one shape which has the consequence that when the tailgate is folded (see fig. 5), the spring member is in a condition of torsion, and when the tailgate is unfolded, the spring member is in a condition of no torsion. Thus, the first spring member 40 will assist the user in unfolding the tailgate. The second spring member 41 is bent in a second shape which has the consequence that when the tailgate is folded, the spring member is in a condition of no torsion, and when the tailgate is unfolded, the spring member is in a condition of torsion. Thus, the second spring member 41 will assist the user in folding the tailgate.

In the figures, the connection of the tailgate with the connecting sections is not illustrated, but the tailgate is mounted to the connecting sections in a position situated lower than the guides. However, if the tailgate is of the type to be folded before it is retracted under the platform of the lorry, the tailgate will be positioned between the two guides in its folded condition. Placing the folded tailgate between the two guides is known in the prior art.

The pull-out system according to the invention is shown in a specific embodiment in the figures. However, this embodiment is not to be seen as a limitation of the invention, but merely as one possible embodiment. Thus, the bearing cylinder, bearing pin and bearing bushing may assume other cross sections than those shown and, likewise, these parts may be produced from other materials than those indicated. The position of the power transmission device may be different than the illustrated one, and this device may be of a different type than a hydraulic cylinder, e.g. a gearwheel mechanism. Also the mounting of the guides to the chassis of the lorry may be accomplished in other ways than the illustrated preferred way. Furthermore, the spring members, their positions and the way in which the members are bent may be provided in different ways.

## Claims

1. A pull-out system for a tailgate of a lorry, said pull-out system comprising at least one first and at least one second mechanical guide (21 ,22) extending parallel with a pull-out direction of the tailgate and each mechanical guide (21, 22) comprising a bearing cylinder (1', 1") and a bearing pin (2), which is guided in relation to each other by means of bearing bushings (3), said bearing cylinder (1', 1") and bearing bushings (3) being provided with bearing surfaces (5-10) and being displaced in relation to each other by means of a power transmission device (24, 25), **characterized in that** the bearing cylinder (1') of the first mechanical guide (21) and its bushing (3) are shaped so as to provide at least two bearing surfaces (5,9) having normals that extend in two nonparallel directions, and that the bearing cylinder (1") of the second mechanical guide (22) and its bushing are shaped so as to only provide bearing surfaces (6, 9) having normals extending in a vertical direction only in relation to the in-use position of the pull-out system..

2. A pull-out system according to claim 1, **characterized in that** the bearing cylinder (1') of the first mechanical guide (21) has a cross section with an inner contour (4) that is octagonal and which comprises four bearing surfaces (5) having normals that are oriented in four directions oriented obliquely towards each other, and that the bearing cylinder (1") of the second mechanical guide (22) also has a cross section with an inner contour (4) that is octagonal and which comprises two further bearing surfaces (6) having normals that are oriented in two mutually opposite and parallel directions.

3. A pull-out system according to claim 1 or 2, **characterized in that** each bearing surface (5) of the bearing cylinder (1') of the first mechanical guide (21) has a smaller area than each further bearing surface (6) of the bearing cylinder (1") of the second mechanical guide (22).

4. A pull-out system according to any one of the preceding claims, **characterized in that** the bearing bushings (3) are produced from nytralon®.

5. A pull-out system according to any one of the preceding claims, **characterized in that** the power transmission device is composed of a single hydraulic cylinder (25) and a single piston positioned between the first and the second guide (21, 22) and mounted on a cross section (23), which is secured between at least two connecting rods (15), said hydraulic cylinder (25) and piston displacing the tailgate by a power effect working at a position closer to the first guide (21) than the second guide (22).

6. A pull-out system according to any one of the preceding claims, **characterized in that** the bearing cylinders (1) are provided with a U-shaped section (11) extending along the cylinders with the branches (12, 13) of the U oriented substantially horizontally and with an inner contour (14) of the U having a dovetail shape, and that the chassis of a lorry is provided with a corresponding section (31) with an outer dovetail-shaped contour.

7. A pull-out system according to any one of the preceding claims, **characterized in that** the bearing cylinders (1) comprise a slot (16) extending along the cylinders, and that blades (18) are secured to edge areas (17) of the slot and extend towards the centre of the slot at least to a position where outer edge areas (19) of the blades are in mutual contact.

8. A pull-out system according to any one of the preceding claims, **characterized in that** the bearing pin (2) comprises a first and a second end (2', 2"), that the bearing bushings (3) support the bearing pin in the bearing cylinder (1) in either bearing pin end, and that the connecting rods (15) extend from the bearing pin between the first end and the second end of the bearing pin.

9. A pull-out system according to any one of the preceding claims, **characterized in that** the tailgate is of the folded type, that the tailgate comprises a first part (33), a second part (34) and hinge elements (35), and that spring members (40, 41) extend between the hinge element and the first and second part, respectively, of the tailgate.

10. A pull-out system according to claim 10, **characterized in that** the spring members (40, 41) are produced from spring wire and comprise a rectilinear section (43) designed to exert an elastic force by torsion during unfolding and folding of the tailgate.

## Patentansprüche

1. Ausrücksystem für eine Heckladeeinrichtung eines Lastkraftwagens, wobei das Ausrücksystem wenigstens eine erste und wenigstens eine zweite mechanische Führung (21, 22) aufweist, die sich parallel zu einer Ausrückrichtung der Heckladeeinrichtung erstrecken, und jede mechanische Führung (21, 22) einen Lagerkörper (1', 1") und einen Lagerbolzen (2) aufweist, der in bezug zum anderen mittels Lagerschalen (3) geführt wird, der Lagerkörper (1', 1") und die Lagerschalen (3) mit Lagerflächen (5-10) versehen sind und in Beziehung zueinander mittels einer Kraftübertragungseinrichtung (24, 25) verschiebbar sind, **dadurch gekennzeichnet, daß** der Lagerkörper (1') der ersten mechanischen Führung (21) und seine Lagerschale (3) derart geformt sind, um wenigstens zwei Lagerflächen (5, 9) vorzusehen, die Normalen haben, die sich in zwei nicht parallele Richtungen erstrecken, und daß der Lagerkörper (1") der zweiten mechanischen Führung (22) und seine Schale derart geformt sind, nur um Lagerflächen (6, 9) zu schaffen, die Normalen haben, die sich in einer vertikalen Richtung nur in bezug zur Gebrauchsstellung des Ausrücksystems erstrecken.

2. Ausrücksystem nach Anspruch 1, **dadurch gekennzeichnet, daß** der Lagerkörper (1') der ersten mechanischen Führung (21) ein Querprofil mit einer inneren Kontur (4) aufweist, das oktogonal ist und das vier Lagerflächen (5), die Normalen haben, die in vier quer zueinander orientierten Richtungen orientiert sind, aufweist, und daß der Lagerkörper (1") der zweiten mechanischen Führung (22) ebenfalls ein Querprofil mit einer inneren Kontur (4) aufweist, das oktogonal ist und das zwei weitere Lagerflächen (6), die Normalen haben, die in zwei einander gegenüberliegenden und parallelen Richtungen ausgerichtet sind, aufweist.

3. Ausrücksystem nach Anspruch 1 oder 2, **dadurch gekennzeichnet, daß** jede Lagerfläche (5) des Lagerkörpers (1') der ersten mechanischen Führung (21) eine kleinere Fläche besitzt als jede weitere Lagerfläche (6) des Lagerkörpers (1") der zweiten mechanischen Führung.

4. Ausrücksystem nach einem der vorangehenden Ansprüche, **dadurch gekennzeichnet, daß** die Lagerschalen aus Nytralon (eingetragene Marke) hergestellt sind.

5. Ausrücksystem nach einem der vorangehenden Ansprüche, **dadurch gekennzeichnet, daß** die Kraftübertragungseinrichtung aus einem einzelnen hydraulischen Zylinder (25) und einem einzigen Kolben zusammengesetzt ist, der zwischen der ersten und der zweiten Führung (21, 22) angeordnet ist und an einem Querprofil (23) befestigt ist, das zwischen mindestens zwei Verbindungsstäben (15) befestigt ist, und daß der hydraulische Zylinder (25) und der Kolben die Heckladeeinrichtung durch eine Krafteinwirkung, die an einer Stelle angreift, die zur ersten Führung (21) näher ist als zur zweiten Führung (22), verschieben.

6. Ausrücksystem nach einem der vorangehenden Ansprüche, **dadurch gekennzeichnet, daß** die Lagerkörper (1) mit einem U-förmigen Bereich (11), der sich entlang der Körper mit den Armen (12, 13) des U erstreckt, das im wesentlichen horizontal ausgerichtet ist, und mit einer inneren Kontur (14) des U, das eine Schwalbenschwanzform besitzt, versehen sind und daß das Chassis des Lastkraftwagens mit einem entsprechenden Bereich (31) mit einer äußeren schwalbenschwanzförmigen Kontur versehen ist.

7. Ausrücksystem nach einem der vorangehenden Ansprüche, **dadurch gekennzeichnet, daß** die Lagerkörper (1) eine Nut (16) aufweisen, die sich entlang der Körper erstreckt, und daß Zungen (18) in Kantenbereichen (17) der Nut befestigt sind und sich zur Mitte der Nut wenigstens zu einer Position, in der die Kantenbereiche (19) der Zungen im gegenseitigen Kontakt sind, erstrecken.

8. Ausrücksystem nach einem der vorangehenden Ansprüche, **dadurch gekennzeichnet, daß** der Lagerbolzen (2) ein erstes und ein zweites Ende (2', 2") aufweist, daß die Lagerschalen (3) den Lagerbolzen in dem Lagerkörper (1) an jedem Lagerbolzenende halten, und daß sich die Verbindungsstäbe (15) von dem Lagerbolzen zwischen dem ersten und dem zweiten Ende des Lagerbolzens erstrecken.

9. Ausrücksystem nach einem der vorangehenden Ansprüche, **dadurch gekennzeichnet, daß** die Heckladeeinrichtung aus einer zusammengeklappten Ausführung besteht, daß die Heckladeeinrichtung ein erstes Teil (33), ein zweites Teil (34) und Gelenkelemente (35) aufweist und daß Federglieder (40, 41) sich zwischen dem Gelenkelement und dem ersten und zweiten Teil bzw. der Heckladeeinrichtung erstrecken.

10. Ausrücksystem nach Anspruch 10, **dadurch gekennzeichnet, daß** die Federelemente (40, 41) aus Federdraht hergestellt sind und einen geraden Bereich (43) aufweisen, der ausgebildet ist, um eine elastische Kraft durch Drehung während des Entfaltens und Faltens der Heckladeeinrichtung auszuüben.

## Revendications

1. Système de déploiement de plate-forme arrière de camion, le système de déploiement comprenant au moins un premier et au moins un second guide mécanique (21, 22) s'étendant parallèlement à une direction de déploiement de la plate-forme arrière et chaque guide mécanique (21, 22) comprenant un cylindre porteur (1', 1") et un axe porteur (2) guidés en relation mutuelle au moyen de paliers supports (3) le cylindre porteur (1', 1") et les paliers supports (3) comportant des surfaces de support (5-10) et étant déplacés en relation mutuelle au moyen d'un dispositif de transmission de force (24, 25), **caractérisé par le fait que** le cylindre porteur (1') du premier guide mécanique (21) et son palier (3) sont de forme agencée pour fournir au moins deux surfaces de support (5, 9) dont des perpendiculaires s'étendent dans deux directions non-parallèles, et que le cylindre porteur (1") du second guide mécanique (22) et son palier sont de forme agencée pour ne fournir que des surfaces de support (6, 9) dont des perpendiculaires s'étendent dans une direction verticale seulement en relation avec la position d'utilisation du système de déploiement.

2. Système de déploiement selon la revendication 1, **caractérisé par le fait que** le cylindre porteur (1') du premier guide mécanique (21) présente une section transversale à contour intérieur octogonal et comprend quatre surfaces de support (5) dont des perpendiculaires sont orientées dans quatre directions mutuellement obliques, et que le cylindre porteur (1'') du second guide mécanique (22) présente aussi une section transversale à contour intérieur (4) octogonal et qui comprend deux autres surfaces de support (6) dont des normales sont orientées dans deux directions mutuellement opposées et parallèles.

3. Système de déploiement selon l'une quelconque des revendications 1 et 2, **caractérisé par le fait que** chaque surface de support (5) du cylindre porteur (1') du premier guide mécanique (21) présente une surface inférieure à celle de chaque autre surface de support (6) du cylindre porteur (1") du second guide mécanique (22).

4. Système de déploiement selon l'une quelconque des revendications précédentes, **caractérisé par le fait que** les paliers supports sont fabriqués à partir de nytralon (c).

5. Système de déploiement selon l'une quelconque des revendications précédentes, **caractérisé par le fait que** le dispositif de transmission de force est constitué d'un unique cylindre hydraulique (25) et d'un unique piston situé entre les premier et second guides (21, 22) et monté sur une section de croisement (23), qui est fixée entre au moins deux barres de liaison (15), le cylindre hydraulique (25) à piston déplaçant la plate-forme arrière par un effet de force s'appliquant en une position plus proche du premier guide (21) que du second guide (22).

6. Système de déploiement selon quelconque l'une des revendications précédentes, **caractérisé par le fait que** les cylindres porteurs (1) présentent une section en forme de U (11) s'étendant le long des cylindres avec les branches (12, 13) du U orientées sensiblement à l'horizontale et un contour interne du U étant en forme de queue d'aronde, et que le châssis du camion comporte une section correspondante (31) présentant un contour externe en forme de queue d'aronde.

7. Système de déploiement selon l'une quelconque des revendications précédentes, **caractérisé par le fait que** les cylindres porteurs (1) comportent une fente (16) s'étendant le long des cylindres, et que des lames (18) sont fixées à des zones de bord (17) de la fente et s'étendent vers le centre de la fente au moins à une position où des zones externes de bord (19) des lames sont en contact mutuel.

8. Système de déploiement selon l'une quelconque des revendications précédentes, **caractérisé par le fait que** l'axe porteur (2) comprend des première et seconde extrémités (2', 2"), que les paliers supports (3) portent la broche support dans le cylindre porteur (1) dans n'importe quelle extrémité de broche support, et que les barres de liaison (15) s'étendent, depuis la broche support, entre la première extrémité et la seconde extrémité de la broche support.

9. Système de déploiement selon l'une quelconque des revendications précédentes, **caractérisé par le fait que** la plate-forme arrière est de type repliable, que la plate-forme arrière comporte une première partie (33), une seconde partie (34) et des éléments d'articulation (35), et que des éléments élastiques (40, 41) s'étendent entre l'élément d'articulation et les première et seconde parties, respectivement, de la plate-forme arrière.

10. Système de déploiement selon la revendication 9, **caractérisé par le fait que** les éléments élastiques (40, 41) sont fabriqués à partir de fil élastique et comportent un tronçon rectiligne (43) agencé pour exercer une force élastique par torsion pendant le déploiement et le reploiement de la plate-forme arrière.
